# EUROPÄISCHE PATENTSCHRIFT

(11) **EP 2 639 563 B1**
(45) Veröffentlichungstag und Bekanntmachung des Hinweises auf die Patenterteilung: **30.04.2014**
(21) Anmeldenummer: 12159666.2
(22) Anmeldetag: 15.03.2012
(51) Int. Cl.: G01L 7/04, G01L 19/12

(54) **Zeigermessgerät mit batterielosem Funkschalter als Signalgeber**
Analogue measuring device with battery-free remote switch as signal generator
Appareil de mesure de cadran doté d'un commutateur radio sans batterie comme émetteur de signal

(43) Veröffentlichungstag der Anmeldung: 18.09.2013
(73) Patentinhaber: AFRISO-Euro-Index GmbH, 74363 Güglingen (DE)
(72) Erfinder: Aldinger, Dr. Ulrich, 70192 Stuttgart (DE); Zimmermann, Klaus, 63839 Kleinwallstadt (DE)
(74) Vertreter: Kohler Schmid Möbus

(56) Entgegenhaltungen:
- DE-A1- 10 062 028
- DE-A1- 10 125 059
- DE-U1- 9 300 709
- US-A1- 2006 038 695

## Beschreibung

Die vorliegende Erfindung betrifft ein Messgerät mit einer mechanischen Messanzeige und mit einem Signalgeber, der bei einer vorbestimmten Position eines beweglichen Anzeigeelements der Messanzeige ausgelöst wird

Es sind beispielsweise Manometer mit einem Signalgeber bekannt, der bei Erreichen eines eingestellten Grenzwertes ein elektrisches Signal z.B. an eine Überwachungszentrale ausgibt. Als Signalgeber sind dabei die folgenden Varianten bekannt:
- elektromechanische Kontakte, wie z.B. Magnetspringkontakte, Schleichkontakte oder Mikroschalter;
- Reedkontakte;
- Induktivkontakte und Elektronikkontakte;
- Pneumatikkontakte.

Diese bekannten Manometer werden über Kabelanbindung mit einem Fremdstromkreis betrieben, um bei Erreichen des eingestellten Grenzwertes das elektrische Signal auszugeben. Die hierfür erforderlichen Kabelanbindungen erfordern allerdings einen erheblichen Aufwand für die Kabelverlegung.

US 2006 038 695 offenbart einen batteriebetriebenen Drucksensor mit einem Zeiger, wobei bei Erreichen einer vorgegebenen Position ein Alarm ausgelöst wird.

Es die Aufgabe der vorliegenden Erfindung, ein Messgerät der eingangs genannten Art dahingehend weiterzubilden, dass der Aufwand für die Installation verringert werden kann.

Diese Aufgabe wird erfindungsgemäß dadurch gelöst, dass der Signalgeber durch einen batterielosen Funkschalter gebildet ist, bei dem die Energie für die Abgabe eines Funksignals allein aus der auf sein Schalterelement wirkenden Betätigungskraft gewonnen wird, und dass das Schalterelement durch die Messanzeige durch einen von der Messanzeige ausgelösten Kraftspeicher betätigbar ist.

Bei dem erfindungsgemäßen Messgerät sind weder Fremdstromkreise noch Kabelanbindungen erforderlich, so dass das Messgerät nicht mehr regelmäßig kontrolliert werden muss. Bei solchen batterielosen Funktastern, wie sie beispielsweise von der Fa. EnOcean GmbH (enocean.com/de) angeboten werden, siehe auch DE 10125059, wird die Energie für die Funksignalübertragung allein aus der auf die Schalttaste ausgeübten Betätigungskraft gewonnen. Die zum Betätigen des Funkschalters erforderliche Schaltkraft wird von dem Kraftspeicher bereitgestellt. Da das erfindungsgemäße Messgerät ohne elektrischen Strom und Spannung auskommt, ist es auch für den Einsatz in explosionsgefährdeten Bereichen ("EX-Bereichen") geeignet.

Das Anzeigeelement der Messanzeige kann beispielsweise linear verschiebbar geführt sein (z.B. bei einem Durchflussmesser) oder verdrehbar gelagert sein (z.B. bei einem Zeigermessgerät).

Der Kraftspeicher ist besonders bevorzugt eine Schraubenfeder (Druck- oder Zugfeder), kann aber grundsätzlich jede Art von Feder sein, also beispielsweise auch eine Gasfeder.

Vorzugsweise ist der Kraftspeicher in einem vorgespannten Zustand arretierbar und seine in dem arretierten Zustand gespeicherte Kraft mindestens so groß wie die zum Betätigen des Schalterelements erforderliche Schaltkraft, wobei ein von der Messanzeige betätigter, insbesondere mechanisch betätigter Auslösemechanismus bei der vorbestimmten Position des Anzeigeelements die Arretierung des Kraftspeichers löst. Die zum Lösen der Arretierung erforderliche Auslösekraft ist kleiner als die im arretierten Kraftspeicher gespeicherte Kraft. Bei Erreichen eines zuvor eingestellten Grenzwertes wird die Arretierung des Kraftspeichers gelöst, der dann den Funkschalter schnell und kräftig betätigt, welcher wiederum das Funksignal aussendet.

Das erfindungsgemäße Messgerät kann beispielsweise ein Druckmessgerät (z.B. Manometer), ein Füllstandsmessgerät, ein Durchflussmessgerät, eine Uhr, ein Temperaturmessgerät, eine Waage, etc. sein.

Besonders bevorzugt ist das Messgerät als Zeigermeßgerät mit einem Zeigerwerk und einem Istwert-Zeiger ausgebildet, wobei der batterielose Funkschalter bei einer vorbestimmten Position des Zeigerwerks ausgelöst wird.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erfindungsgemäßes Zeigermeßgerät mit einem batterielosen Funkschalter; und
- Fig. 2: eine Detailansicht eines in Fig. 1 gezeigten Auslösemechanismus des batterielosen Funkschalters.

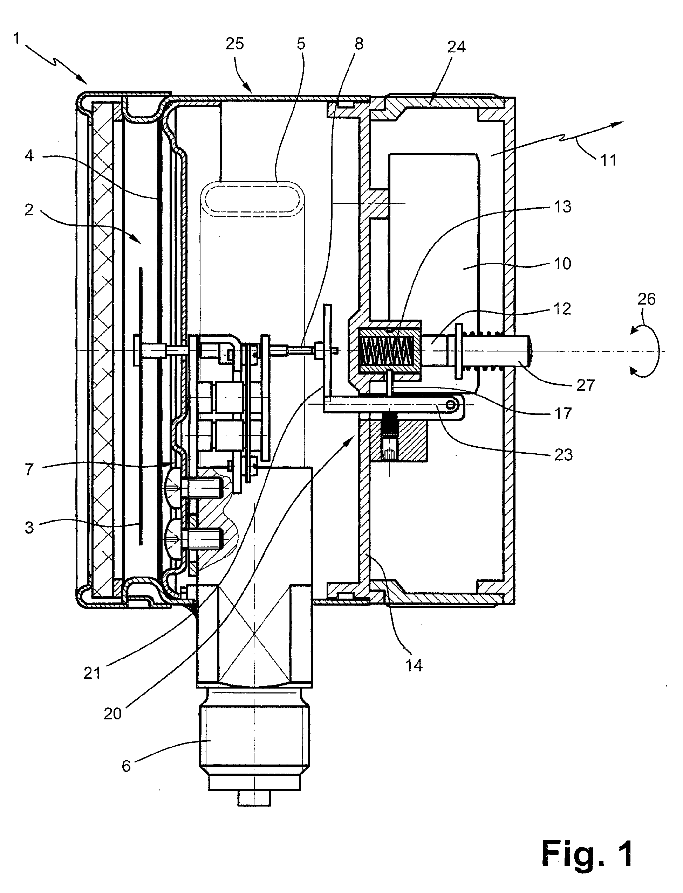

Das in **Fig. 1** als Rohrfedermanometer ("Bourdonfeder-Manometer") ausgeführte Zeigermeßgerät **1** umfasst in bekannter Weise ein Zeigerwerk **2** mit einem Istwert-Zeiger **3** und einer Skala **4** sowie eine Rohrfeder **5** mit ovalem Querschnitt zur Druckmessung. Das zu messende Medium strömt über einen Manometeranschluss **6** in die am anderen Ende verschlossene Rohrfeder 5 ein, die halbmondförmig gebogen ist. Der einwirkende Druck biegt diese Form auf, da der Druck bestrebt ist, den Querschnitt der Rohrfeder 5 in Kreisform zu bringen. Die Größe dieser Bewegung wird durch eine Mechanik **7** in eine Drehbewegung umgesetzt, die den Istwert-Zeiger 3 um seine Zeigerachse **8** dreht, wodurch der Druckmesswert auf der Skala 4 angezeigt wird.

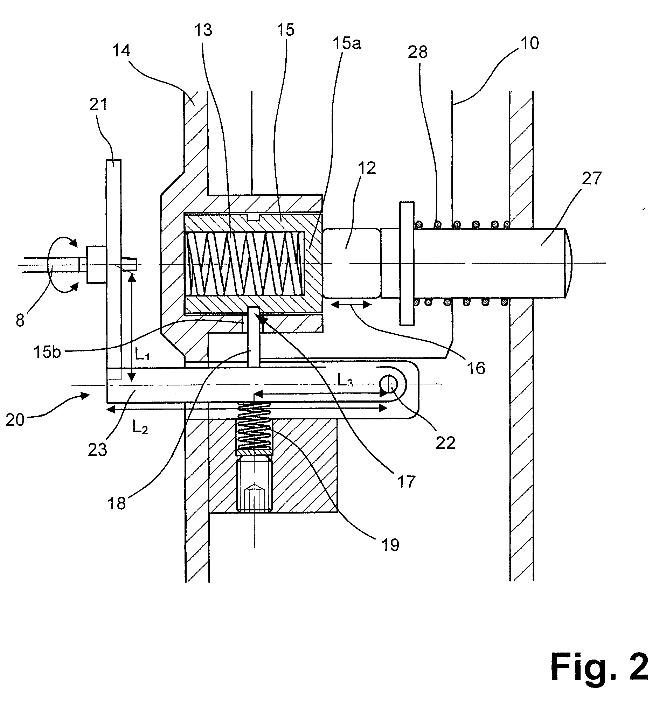

Das Zeigermeßgerät 1 weist einen batterielosen Funkschalter **10** auf, bei dem die Energie für die Abgabe eines Funksignals **11** allein aus der auf seine Schaltertaste **12** wirkenden Betätigungskraft gewonnen wird. Zum Betätigen der Schaltertaste 12 ist ein Kraftspeicher in Form einer Druck- bzw. Schaltfeder **13** vorgesehen, die zwischen einer gehäuseseitigen Zwischenwand **14** und der Schaltertaste 12 angeordnet ist. Wie in **Fig. 2** im Detail gezeigt, ist die Schaltfeder 13 in einer am einen Ende verschlossenen Schalthülse **15** angeordnet, die an der Zwischenwand 14 in Betätigungsrichtung **16** der Schaltertaste 12 verschiebbar geführt ist. Die Schaltfeder 13 stützt sich einenends am Boden **15a** der Schalthülse 15 und anderenends an der Zwischenwand 14 ab.

In Fign. 1 und 2 ist die Schaltfeder 13 vorgespannt und in diesem Zustand mittels eines Gesperres **17** arretiert, das die Schalthülse 15 gegen die Federkraft F₁ der gespannten Schaltfeder 13 feststellt. Im arretierten Zustand ist die Federkraft F₁ der gespannten Schaltfeder 13 deutlich größer als die zum Betätigen der Schaltertaste 12 erforderliche Schaltkraft F_{S}, also F₁ > F_{S} (z.B. F₁ = 2*F_{S}). Das Gesperre 17 ist durch eine Klinke oder einen Riegel **18** gebildet, der querbeweglich zwischen der die Schalthülse und -feder 15, 13 arretierenden Sperrstellung und einer die Schalthülse und -feder 15, 13 freigebenden Freigabestellung geführt und durch eine Sperrfeder **19** in die Sperrstellung vorgespannt ist. In der Sperrstellung greift der Riegel 18 in eine Aussparung **15b** der Schalthülse 15 ein, die dadurch festgestellt ist.

Das Zeigermeßgerät 1 weist weiterhin einen vom Zeigerwerk 2 mechanisch betätigten Auslösemechanismus **20** auf, der bei einer vorbestimmten Position des Istwert-Zeigers 3 das Gesperre 17 löst, also den Riegel 18 aus seiner Sperrstellung in die Freigabestellung bewegt. Der Auslösemechanismus 20 umfasst einen an der Zeigerachse 8 des Zeigerwerks 2 angeordneten Schaltnocken, der hier in Form einer Exzenterscheibe **21** ausgebildet ist, und einen bei **22** an der Zwischenwand 14 angelenkten Betätigungshebel **23**, an dem der Riegel 18 vorgesehen ist und dessen Auslenkung von der Exzenterscheibe 21 gegen die Wirkung der Sperrfeder 19 gesteuert wird. Die zum Lösen des Gesperres 17 erforderliche Auslösekraft F₃ ist deutlich kleiner als die gespeicherte Federkraft F₁ der arretierten Schaltfeder 13, also F₃ < F₁ (z.B. F₃ = 0,1*F₁). Die Auslösekraft F₃ ist abhängig vom Exzenterabstand **L₁** der Exzenterscheibe 21 und von den an der Exzenterscheibe 21 und am Riegel 18 jeweils wirksamen Hebellängen **L₂**, **L₃** des Betätigungshebels 23. Der Auslösemechanismus 20 ist erforderlich, da das Zeigerwerk 2 die zum Betätigen des Funkschalters 10 erforderliche Schaltkraft F_{S} nicht selbst aufbringen kann.

Wie in Fig. 1 gezeigt, ist das aus Funkschalter 10, Zwischenwand 14 und Auslösemechanismus 20 bestehende Schaltgehäuse **24** am eigentlichen Messgerätegehäuse **25** um ca. 270° drehbar im Sinne des Doppelpfeils **26** gelagert, wodurch die Winkelposition des Betätigungshebels 23 bezüglich der Zeigerachse 8 und der Exzenterscheibe 21 verändert und damit ein oberer oder unterer Grenzwert zum Auslösen des Funkschalters 10 eingestellt werden kann. Die Schaltertaste 12 ist zwischen der Schalthülse 15 und einem Resetknopf **27** eingespannt und kann wie ein normaler Schalter zwei stabile Positionen einnehmen. Beim Wechsel von einer Schalterstellung in die andere wird zusätzlich zum Umlegen des Schalters die Energie erzeugt, die für das Versenden des Funktelegramms 11 benötigt wird.

Die Funktionsweise des erfindungsgemäßen Zeigermeßgeräts 1 ist wie folgt: Durch manuelles Drücken des Resetknopfs 27 gegen die Rückstellkraft F₂ (F₂ << F_{S}) einer Beistellfeder **28** wurden die Schaltertaste 12 und damit auch die Schalthülse 15 nach links in die gezeigte Ausgangsstellung bewegt, wodurch gleichzeitig auch die Schaltfeder 13 vorgespannt wurde. Die Schalthülse 13 mitsamt der vorgespannten Schaltfeder 13 wurde durch den Riegel 18 arretiert. Im Betrieb drehen sich der Istwert-Zeiger 3 und die Exzenterscheibe 21 entsprechend dem wirkenden Druck, und der Betätigungshebel 23 wird durch die Exzenterscheibe 21 ausgelenkt. Wenn dabei ein eingestellter, z.B. oberer Druckgrenzwert erreicht wird, wird der Betätigungshebel 23 durch die Exzenterscheibe 21 so weit ausgelenkt, dass der Riegel 18 in seine Freigabestellung bewegt wird und dadurch die Schalthülse 15 und auch die Schaltfeder 13 nicht mehr arretiert sind. Die vorgespannte Schaltfeder 13 drückt die Schaltertaste 12 schnell und kräftig nach rechts, wodurch ein Funksignal ("Funktelegramm") 11 drahtlos abgesetzt wird. Die Energie für diese Funktelegrammübermittlung kommt also nicht aus einer Batterie oder einer Solarzelle, sondern einzig aus der Energie der vorgespannten Schaltfeder 13. Bei Erreichen des eingestellten Grenzwertes wird also die vorgespannte Schaltfeder 13 ausgelöst, die dabei den Energiepuls erzeugt, der zum Versenden des Funktelegramms 11 an eine entsprechende Überwachungszentrale (nicht gezeigt) benötigt wird.

Statt als Schaltfeder kann der Kraftspeicher auch durch einen Druckkolben gebildet sein, der mit dem Manometerdruck ("Systemdruck") beaufschlagt ist und durch das Gesperre 17 in einer gegenüber Atmosphärendruck vorgespannten Position festgestellt werden kann.

## Patentansprüche

1. Messgerät (1) mit einer mechanischen Messanzeige (2) und mit einem Signalgeber, der bei einer vorbestimmten Position eines beweglichen Anzeigeelements (3) der Messanzeige (2) ausgelöst wird,
**dadurch gekennzeichnet,**
**dass** der Signalgeber durch einen ein bewegliches Schalterelement (12) ausweisenden batterielosen Funkschalter (10) gebildet ist, bei dem die Energie für die Abgabe eines Funksignals (11) allein aus der auf das Schalterelement (12) wirkenden Betätigungskraft gewonnen wird, und
**dass** das Schalterelement (12) durch einen von der Messanzeige (2) ausgelösten Kraftspeicher (13) betätigbar ist, wobei der Kraftspeicher (13) in einem vorgespannten Zustand arretierbar ist und seine in dem arretierten Zustand gespeicherte Kraft mindestens so groß wie die zum Betätigen des Schalterelements (12) erforderliche Schaltkraft ist, wobei ein von der Messanzeige (2) betätigter, insbesondere mechanisch betätigter Auslösemechanismus (20) vorgesehen ist, der bei der vorbestimmten Position des Anzeigeelements (3) die Arretierung (17) des Kraftspeichers (13) löst, und wobei die zum Lösen der Arretierung (17) erforderliche Auslösekraft kleiner als die im arretierten Kraftspeicher (13) gespeicherte Kraft ist.

2. Messgerät nach Anspruch 1, **dadurch gekennzeichnet, dass** der Kraftspeicher durch eine Feder (13) gebildet ist.

3. Messgerät nach Anspruch 1, **dadurch gekennzeichnet, dass** der Kraftspeicher (13) ein pneumatisch betriebener Druckkolben ist.

4. Messgerät nach einem der vorhergehenden Ansprüche, **dadurch gekennzeichnet, dass** der Auslösemechanismus (20) einen auf einer Achse (8) der Messanzeige (2) angeordneten Schaltnocken (21) aufweist.

5. Messgerät nach Anspruch 4, **dadurch gekennzeichnet, dass** der Auslösemechanismus (20) einen die Arretierung (17) steuernden Betätigungshebel (23) aufweist, dessen Auslenkung von dem Schaltnocken (21) gesteuert wird.

6. Messgerät nach einem der vorhergehenden Ansprüche, **dadurch gekennzeichnet, dass** die Arretierung durch ein Gesperre (17) gebildet ist, dessen Klinke oder Riegel (18) zwischen einer den vorgespannten Kraftspeicher (13) arretierenden Sperrstellung und einer den Kraftspeicher (13) freigebenden Freigabestellung geführt und durch eine Sperrfeder (19) in die Sperrstellung vorgespannt ist.

7. Messgerät nach einem der vorhergehenden Ansprüche, **dadurch gekennzeichnet, dass** eine Handhabe (24) zum manuellen Spannen des Kraftspeichers (13) vorgesehen ist.

8. Messgerät nach Anspruch 7, **dadurch gekennzeichnet, dass** das Schalterelement (12) des Funkschalters (10) zwischen dem Kraftspeicher (13) und der Handhabe (24) eingespannt ist.

9. Messgerät nach einem der vorhergehenden Ansprüche, **dadurch gekennzeichnet, dass** das Messgerät als Zeigermeßgerät (1) mit einem Zeigerwerk (2) und einem Istwert-Zeiger (3) ausgebildet ist, wobei der batterielose Funkschalter (10) bei einer vorbestimmten Position des Zeigerwerks (2) ausgelöst wird.

## Claims

1. Measuring instrument (1) with a mechanical measuring gauge (2) and a signal generator which is triggered at a predetermined position of a movable pointer element (3) of the measuring gauge (2),
**characterized in that**
the signal generator is formed by a battery-free wireless switch (10) which comprises a movable switch element (12) and the energy of which for emitting a radio signal (11) is gained merely from the actuating force acting on the switch element (12), and
the switch element (12) can be actuated by an energy storage (13) triggered by the measuring gauge (2), wherein the energy storage (13) can be locked in a pretensioned state and its force stored in the locked state is at least as large as the switching force required for actuating the switch element (12), wherein a trigger mechanism (20) actuated, in particular mechanically, by the measuring gauge (2) is provided which releases the lock (17) of the energy storage (13) in the predetermined position of the pointer element (3), and wherein the release force required for releasing the lock (17) is smaller than the energy stored in the locked energy storage (13).

2. Measuring instrument according to claim 1, **characterized in that** the energy storage is formed by a spring (13).

3. Measuring instrument according to claim 1, **characterized in that** the energy storage (13) is a pneumatically operated pressure piston.

4. Measuring instrument according to any one of the preceding claims, **characterized in that** the trigger mechanism (20) has a switching cam (21) arranged on an axis (8) of the measuring gauge (2).

5. Measuring instrument according to claim 4, **characterized in that** the trigger mechanism (20) has an actuating lever (23) which controls the lock (17) and the deflection of which is controlled by the switching cam (21).

6. Measuring instrument according to any one of the preceding claims, **characterized in that** the lock is formed by a locking mechanism (17), the latch or bolt (18) of which is guided between a locked position locking the pretensioned energy storage (13) and a release position releasing the energy storage (13), and is pretensioned by a locking spring (19) into the locked position.

7. Measuring instrument according to any one of the preceding claims, **characterized in that** a handle (24) is provided for manually tensioning the energy storage (13).

8. Measuring instrument according to claim 7, **characterized in that** the switching element (12) of the wireless switch (10) is clamped between the energy storage (13) and the handle (24).

9. Measuring instrument according to any one of the preceding claims, **characterized in that** the measuring instrument is designed as a pointer-type measuring instrument (1) with a motion work (2) and an actual-value pointer (3), wherein the battery-free wireless switch (10) is triggered at a predetermined position of the motion work (2).

## Revendications

1. Appareil de mesure (1) doté d'un affichage de mesure mécanique (2) et d'un émetteur de signaux qui est déclenché dans une position prédéterminée d'un élément d'affichage mobile (3) de l'affichage de mesure (2),
**caractérisé en ce**
**que** l'émetteur de signaux est formé par un commutateur radio sans pile (10) présentant un élément commutateur mobile (12), dans lequel l'énergie pour l'émission d'un signal radio (11) est extraite seulement de la force d'actionnement agissant sur l'élément commutateur (12), et que l'élément commutateur (12) peut être actionné par un accumulateur de force (13) déclenché par l'affichage de mesure (2), l'accumulateur de force (13) pouvant être bloqué dans un état précontraint et sa force accumulée dans l'état bloqué étant au moins aussi grande que la force de commutation nécessaire pour actionner l'élément commutateur (12), un mécanisme de déclenchement (20) actionné par l'affichage de mesure (2), en particulier actionné mécaniquement, étant prévu, qui libère le moyen de blocage (17) de l'accumulateur de force (13) dans la position prédéterminée de l'élément d'affichage (3), et la force de déclenchement nécessaire pour libérer le moyen de blocage (17) étant plus petite que la force accumulée dans l'accumulateur de force (13) bloqué.

2. Appareil de mesure selon la revendication 1, **caractérisé en ce que** l'accumulateur de force est formé par un ressort (13).

3. Appareil de mesure selon la revendication 1, **caractérisé en ce que** l'accumulateur de force (13) est un piston de pression actionné pneumatiquement.

4. Appareil de mesure selon une des revendications précédentes, **caractérisé en ce que** le mécanisme de déclenchement (20) présente une came de commutation (21) disposée sur un axe (8) de l'affichage de mesure (2).

5. Appareil de mesure selon la revendication 4, **caractérisé en ce que** le mécanisme de déclenchement (20) présente un levier d'actionnement (23) qui commande le moyen de blocage (17) et dont la déviation est commandée par la came de commutation (21).

6. Appareil de mesure selon une des revendications précédentes, **caractérisé en ce que** le moyen de blocage est formé par un dispositif d'encliquetage (17) dont le cliquet ou le verrou (18) est guidé entre une position de verrouillage qui bloque l'accumulateur de force (13) précontraint et une position de libération qui libère l'accumulateur de force (13) et est précontraint dans la position de verrouillage par un ressort de verrouillage (19).

7. Appareil de mesure selon une des revendications précédentes, **caractérisé en ce qu'**un moyen de manipulation (24) permettant de tendre manuellement l'accumulateur de force (13) est prévu.

8. Appareil de mesure selon la revendication 7, **caractérisé en ce que** l'élément commutateur (12) du commutateur radio (10) est monté entre l'accumulateur de force (13) et le moyen de manipulation (24).

9. Appareil de mesure selon une des revendications précédentes, **caractérisé en ce que** l'appareil de mesure est réalisé sous la forme d'un appareil de mesure à aiguille (1) avec un mécanisme d'aiguille (2) et une aiguille de valeur réelle (3), le commutateur radio sans pile (10) étant déclenché dans une position prédéterminée du mécanisme d'aiguille (2).
